# FASCICULE DE BREVET EUROPEEN

(11) **EP 0 687 831 B1**
(45) Date de publication et mention de la délivrance du brevet: **28.10.1998**
(21) Numéro de dépôt: 95401388.4
(22) Date de dépôt: 14.06.1995
(51) Int. Cl.: F16F 7/12, B60R 19/36, F16F 13/00

(54) **Absorbeur d'énergie perfectionné pour véhicule automobile terrestre**
Perfektionierter Energiedämpfer für Kraftfahrzeug
Energy absorber perfected for automotive vehicle

(30) Priorité: 14.06.1994 FR 9407260
(43) Date de publication de la demande: 20.12.1995
(73) Titulaire: ECIA - EQUIPEMENTS ET COMPOSANTS POUR L'INDUSTRIE AUTOMOBILE, F-25400 Audincourt (FR)
(72) Inventeur: Trassaert, Patrick, F-25400 Audincourt (FR); Laurent, Claude, F-25420 Voujeaucourt (FR); Cast, Steven, Bath BA2 3QU (GB); Booth, Michael, F-75013 Paris (FR)
(74) Mandataire: Polus, Camille

(56) Documents cités:
- DE-A- 3 809 208
- DE-U- 8 806 697
- FR-A- 648 022
- FR-A- 2 205 147
- FR-A- 2 668 436
- US-A- 2 530 072
- US-A- 3 637 051
- US-A- 3 759 351
- US-A- 3 863 909
- US-A- 3 923 292
- US-A- 4 830 347
- PATENT ABSTRACTS OF JAPAN vol. 8 no. 164 (M-313) [1601] ,28 Juillet 1984 & JP-A-59 058245 (TOSHIBA KK) 3 Avril 1984,

## Description

La présente invention concerne les absorbeurs d'énergie et, plus particulièrement, ceux d'entre eux à action progressive et/ou graduelle qui trouvent une application à bord des véhicules automobiles terrestres pour contribuer à la protection.

Dans de nombreux secteurs industriels, il est nécessaire d'absorber l'énergie résultant de chocs relativement importants et c'est tout spécialement le cas du domaine des véhicules automobiles terrestres dont il faut assurer la sécurité des occupants en cas de collision ou d'accident.

Pour la sécurité des véhicules automobiles terrestres, par exemple dans FR-A-2 677 943 (FR-91 07 539), on a déjà proposé de construire notamment leur partie antérieure de manière à ce qu'elle offre une protection en zones ou tranches successives qui sont mises à contribution progressivement de l'avant vers l'arrière, repéré par rapport à l'axe longitudinal traditionnel du véhicule. C'est ainsi qu'on distingue habituellement une zone pour les "petits chocs" se produisant pour une vitesse relative ne dépassant pas 4 km/h environ, une zone pour les chocs "moyens" se produisant pour une vitesse relative de l'ordre de 4 à 8 ou 10 km/h environ, une zone pour les "grands" chocs se produisant pour une vitesse relative de l'ordre de 10 à 20 km/h et enfin une zone pour les chocs "violents" se produisant pour une vitesse relative de plus de 20-25 km/h.

Habituellement, l'énergie des "petits" chocs et/ou des chocs "moyens", est absorbée par le pare-choc ou bouclier dont la "peau" et/ou le revêtement sont mis à contribution pour des vitesses relatives ne dépassant pas 4 km/h environ, et dont la "poutre" ou similaire se déforme d'abord élastiquement réversiblement entre 4-8 km/h et se déforme non-réversiblement entre 8-10 km/h environ. L'énergie des "grands" chocs pour des vitesses relatives de l'ordre de 10-15 km/h est souvent absorbée par des tampons ou similaires associés à la structure ou coque du véhicule et placés devant des longerons qui la prolongent vers l'avant. L'énergie des chocs "violents" pour des vitesses relatives atteignant ou dépassant 20-25 km/h est, elle, absorbée essentiellement par les longerons qui se déforment.

Une telle configuration permet en particulier une réparation éventuelle, facilitée par un échange standard de la seule zone atteinte après vérification immédiate que les longerons n'ont pas été affectés, ce qui nécessiterait un passage "au marbre" de la coque ou structure pour la dégauchir.

Diverses solutions ont déjà été proposées. Des exemples de solution sont par exemple exposés dans les documents FR-A-2 668 436 (FR-90 13 557) et FR-A-2 677 943 (FR-91 07 539) au nom de la Demanderesse.

Si ces solutions donnent relativement satisfaction, elles sont toutefois compliquées car elles nécessitent la mise en oeuvre d'absorbeurs d'énergie de structure et de nature complexe.

DE-A-38 09 208 décrit un absorbeur d'énergie comportant une garniture déformable comprenant des billes en caoutchouc. Ces billes sont logées dans un corps. Les chocs sont transmis à la garniture par un piston.

On connaît par ailleurs dans l'état de la technique un absorbeur d'énergie à action progressive destiné à être interposé entre un châssis-coque de véhicule automobile terrestre, de préférence un longeron de ce châssis, et un pare-choc de ce véhicule, du type comprenant :
a) un corps avec une chambre intérieure,
b) un piston muni d'une tête, placée dans la chambre de manière à pouvoir y coulisser, et d'une tige qui est montée coulissante à travers une première extrémité passante du corps et qui est reliée par ses extrémités à la tête et à un socle de fixation sur le pare-choc (respectivement le châssis-coque), et
c) une garniture déformable et remplaçable placée dans la chambre entre la tête et une seconde extrémité du corps destinée à être fixée sur le châssis-coque (respectivement le pare-choc). Un tel absorbeur est décrit par exemple dans FR-2 205 147.

Le but de l'invention est de remédier aux inconvénients évoqués plus haut à l'aide d'un absorbeur d'énergie du type précité, facile à fabriquer et à installer et d'une grande efficacité, qui opère de manière à assurer une absorption progressive de l'énergie par des déformations différenciées, une pour les "petits" chocs où il subit une déformation élastique réversible, une pour les chocs "moyens" où il subit une déformation plastique réduite et une pour les chocs "grands" où il se détruit.

L'invention a pour objet un absorbeur d'énergie à action progressive du type précité, caractérisé en ce que la garniture comporte des sphères creuses déformables progressivement élastiquement et plastiquement, en ce que la première extrémité du corps et le socle comprennent des faces d'appui complémentaires coopérant entre elles au-delà d'un seuil de déformation de la garniture, de manière à déformer le corps, et en ce que la seconde extrémité du corps et le socle comprennent des moyens de fixation libérables permettant le remplacement de l'absorbeur déformé.

L'invention ressortira plus clairement à la lecture de la description et des revendications qui suivent ainsi que de l'examen du dessin annexé, donné seulement à titre d'exemple, où :
- la Figure 1 est une vue schématique partielle en coupe longitudinale méridienne d'un premier mode de réalisation d'un absorbeur d'énergie selon l'invention dans son application particulière à un véhicule par exemple automobile terrestre;
- la Figure 2 est une section transversale locale de la Figure 1;
- les vues A, B, C, D de la Figure 3 illustrent le mode de réalisation de l'absorbeur selon l'invention de la Figure 1 dans diverses phases de son fonctionnement; et
- la Figure 4 est une vue similaire à la Figure 1 d'un second mode de réalisation d'un absorbeur d'énergie selon l'invention.

Les absorbeurs d'énergie en général et ceux plus particulièrement destinés à équiper des véhicules notamment automobiles terrestres étant bien connus dans la technique, on ne décrira dans ce qui suit que ce qui concerne directement ou indirectement l'invention. Pour le surplus, l'Homme du Métier de la technique considérée puisera dans les solutions classiques courantes à sa disposition pour faire face aux problèmes particuliers auxquels il est confronté. En particulier, il pourra se reporter utilement aux documents précités.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants d'un absorbeur d'énergie à action progressive selon l'invention avant d'en exposer la fabrication au besoin, et le fonctionnement.

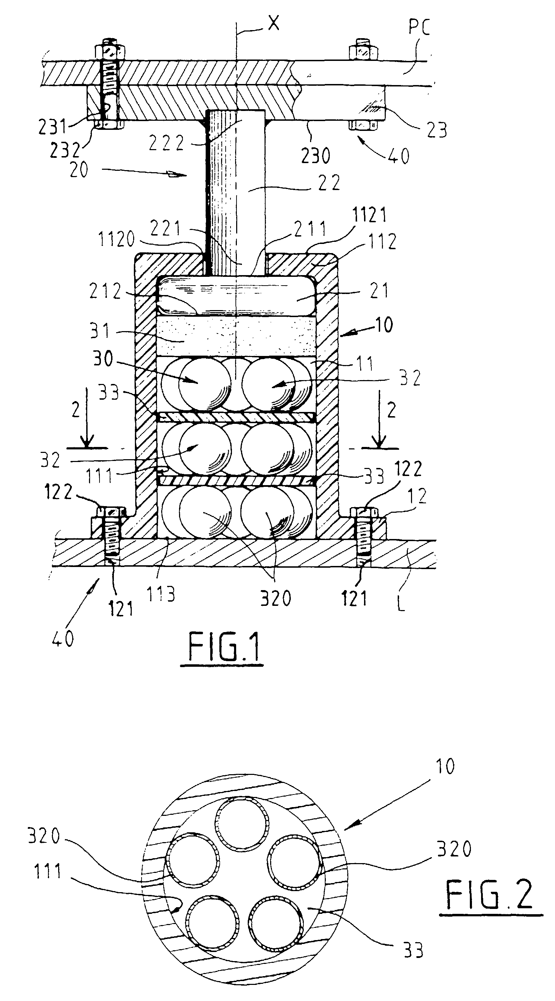

On a représenté sur les Figures 1 et 2 un absorbeur d'énergie à action progressive selon un premier mode de réalisation de l'invention.

Cet absorbeur d'énergie est destiné à être monté entre, d'une part, un longeron L le plus souvent mécano-soudé qui prolonge vers l'avant et/ou l'arrière un châssis ou coque de véhicule classique, et d'autre part, un pare-chocs PC, bouclier ou similaire, le plus souvent constitué d'une poutre sur laquelle est disposée un revêtement avec une "peau" ou similaire superficielle.

L'absorbeur d'énergie comprend essentiellement un corps 10, un piston 20, une garniture 30, et comporte des moyens de fixation libérables 40 permettant son montage sur le véhicule et son remplacement.

Le corps 10 comprend une chambre 11 intérieure délimitée par une paroi 111 latérale, par un fond passant 112, venu de matière avec une première extrémité du corps 10, transpercé d'un orifice 1120, et par une embouchure 113 délimitée par la seconde extrémité du corps 10. Cette embouchure 113 est, s'il y a lieu, fermée par un couvercle 1130 ou analogue pour les raisons qui apparaîtront par la suite.

S'il y a lieu, et de préférence, pour permettre une déformation maîtrisée du corps, celui-ci est muni de zones de configuration particulière par leur forme et/ou leur épaisseur, voire leur traitement notamment, qui favorisent la déformation du corps par exemple par rupture pour les raisons qui apparaîtront par la suite.

Le piston 20 comprend une tête 21 avec deux faces 211 et 212 opposées, avec une tige 22 qui présente deux extrémités 221, 222 et avec un socle 23. Comme on le voit, la tête 21 est placée dans la chambre 11 de manière à pouvoir y coulisser et sa face 211 est par exemple reliée par toute technique appropriée convenable tel le soudage à l'extrémité 221 de la tige 22. La tige 22 est engagée dans l'orifice 1120 du fond de manière à pouvoir s'y mouvoir et son extrémité 222 par exemple est reliée au socle 23 par toute technique appropriée convenable tel le soudage.

La garniture 30 comprend, essentiellement, s'il y a lieu au moins un tampon 31 élastique, et au moins un lit 32 de sphères 320 creuses. De préférence, le tampon 31 est interposé entre la tête 21 du piston et les sphères 320. Le lit 32 de sphères 320 est mono ou multistrates et les sphères sont jointives ou non. S'il y a lieu, lorsque la garniture comprend plusieurs lits de sphères, au moins deux lits successifs sont, au besoin, séparés par une entretoise 33. Ces sphères sont douées d'une certaine élasticité et sont déformables progressivement élastiquement et plastiquement.

L'embouchure 113 permet de mettre en place la garniture 30 dans le corps 10 et de retirer cette garniture en vue de son remplacement.

Le fond 112 et le socle 23 comprennent des faces d'appui complémentaires 1121 et 230 coopérant entre elles au-delà d'un seuil de déformation plastique de la garniture 30 de manière à déformer le corps 10 comme cela sera précisé ultérieurement.

Les moyens de fixation libérables 40 comprennent, d'une part des moyens de fixation de la seconde extrémité du corps 10 sur le longeron L, et d'autre part des moyens de fixation du socle 23 sur le pare-choc PC.

Les moyens de fixation de la seconde extrémité du corps 10 comprennent une embase 12 venue de matière avec le corps dans laquelle sont ménagés des trous 121, éventuellement taraudés, pour le passage d'organes de fixation amovibles tels que des vis 122 ou des rivets.

Les moyens de fixation du socle 23 comprennent des trous 231 ménagés dans ce socle pour le passage d'organes de fixation amovible tels que des vis 232 ou des rivets.

Les faces d'appui complémentaires 1121,230 sont circulaires et sont centrées sur l'axe X de la tige 22. Les trous 231 de fixation du socle 23 sont décalés radialement par rapport à la face d'appui 1121 du fond 112 du corps, de manière que les organes de fixation, faisant saillie sur la face d'appui 230, ne viennent pas au contact du fond 112 lorsque le socle 23 touche ce dernier.

L'un au moins des corps, piston et garniture est fait à base de métal ou à base de résine synthétique dont les propriétés sont au besoin convenablement adaptées à l'aide de charges et/ou de renforts de fibres de verre ou similaires.

Tous les constituants sont obtenus et mis en forme selon des techniques traditionnelles convenablement adaptées aux matériaux dont ils sont faits tels que par exemple, le moulage par injection, l'extrusion, l'expansion par moussage. Une technique de fabrication de sphères creuses est, par exemple, décrite dans le document FR-A-2 657 043 (FR 90-00 484) auquel on pourra utilement se reporter.

Tous les constituants d'un absorbeur d'énergie à action progressive selon l'invention sont réunis, assemblés et montés comme cela ressort clairement de l'examen des figures. Une fois la garniture placée dans la chambre en appui contre la tête du piston au contact du fond, l'embouchure du corps est s'il y a lieu close par un couvercle convenable ou similaire maintenu sur l'embouchure par toute technique appropriée telle le soudage, le collage, l'encliquetage élastique ou non.... Autrement, on peut par exemple maintenir les lits de sphères contre le tampon et/ou les entretoises à l'aide de colle ou similaire pour permettre l'opération d'assemblage et de montage ultérieure avec un absorbeur selon l'invention constituant une entité facile à manipuler manuellement ou automatiquement.

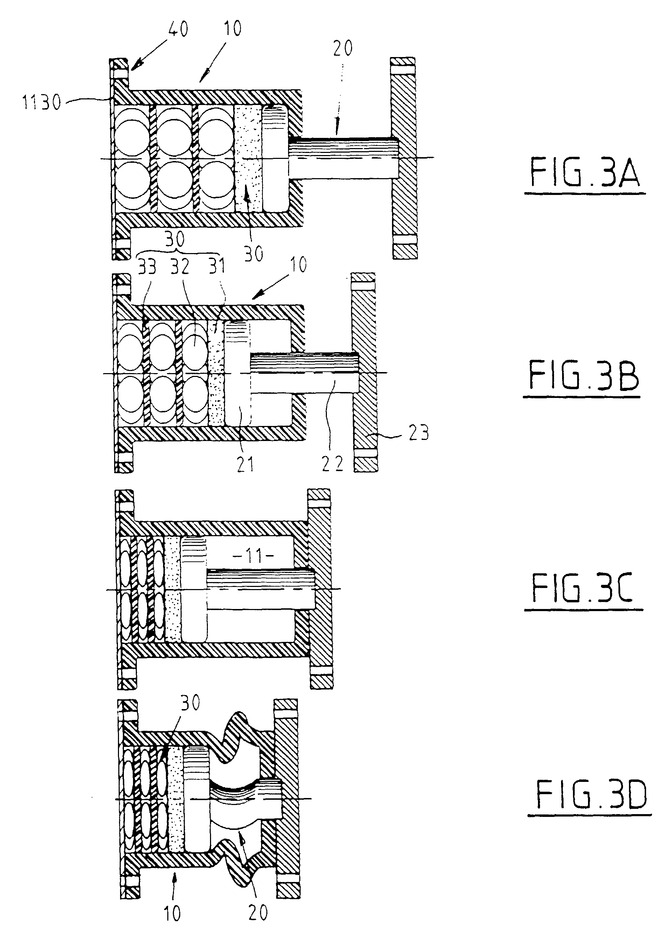

On se reportera maintenant aux diverses vues de la Figure 3 qui illustrent la manière dont opère un absorbeur selon l'invention.

Sur la vue A l'absorbeur est illustré dans son état initial.

Si maintenant survient un choc axial ou oblique ne dépassant pas 30° environ par exemple, à composante longitudinale pour une plage de vitesses par exemple comprises entre 0 et 4 km/h environ, l'énergie est absorbée par une déformation élastique réversible le cas échéant du tampon élastique et/ou des sphères des lits, comme illustré sur la vue B. On observera aussi que l'utilisation de moyens de fixation à rotule ou similaire, permet d'absorber des chocs "en coin" ou latéraux avec un angle de l'ordre de 60°.

Si un tel choc survient pour une plage de vitesses comprise par exemple entre 4 et 8 km/h environ, l'énergie est absorbée de plus par une déformation plastique réduite, comme illustré sur la vue C, jusqu'à ce que les faces d'appui complémentaires 1121,230 du fond du corps et du socle du piston se touchent.

Si maintenant un tel choc survient pour une plage de vitesses comprise par exemple entre 8 à 20 km/h environ, l'énergie est absorbée aussi par destruction de l'absorbeur par flambement de la tige du piston et écrasement du corps qui par exemple "ondule", se gonfle, s'écrase ou éclate avec fragmentation maîtrisée par des lignes de pré-rupture. Une telle déformation privilégiée du corps sert par exemple à limiter l'effort d'amorçage du flambement du corps.

Dans ce mode de réalisation, on a supposé que l'embase du corps était fixée sur les longerons et que le socle du piston était fixé sur le pare-chocs. Il est clair que la solution inverse peut être retenue.

Il est clair que lorsqu'on utilise plusieurs tampons et/ou plusieurs lits de sphères par exemple 25 sphères rangées aléatoirement, les divers tampons peuvent être de taille, nature et structure différentes et qu'il en est de même des sphères d'un lit à l'autre voire au sein d'un même lit. Des éléments élastiques tels des ressorts peuvent aussi être utilisés en complément.

Lorsqu'un absorbeur selon l'invention est fait essentiellement à base de polypropylène, il est peu coûteux, sa masse est de l'ordre de 1 kg et il est facilement recyclable.

Un mode de réalisation de l'invention comprend par exemple un corps et un piston cylindriques qui, à l'état initial, occupent une position telle que l'embase et le socle sont séparés par une distance de l'ordre de 230 mm pour une course du piston de l'ordre de 70 mm lorsqu'il passe de la position initiale illustrée sur la vue A à la position illustrée sur la vue C de la Figure 3. On a utilisé des sphères creuses de diamètre extérieur 25 mm environ pour une épaisseur de l'ordre de 1,2 à raison de cinq sphères non-jointives par lit, comme cela apparaît sur la Figure 2. On a utilisé un tampon élastique en mousse de polypropylène de 80 g/l.

On observera qu'en phase finale de déformation de l'absorbeur comme illustré sur la vue D de la Figure 3, il n'y a pas de déformation de l'embase et de ce fait le longeron auquel il est fixé ne subit aucune atteinte.

Des essais faits avec un absorbeur selon l'invention montrent que pour des vitesses inférieures à 6 km/h environ et pour une masse de 900 kg environ, la courbe effort maximum (en newton) en fonction du déplacement (en millimètre) est, grosso modo linéaire entre 60 mm environ et 20 kN environ. Des essais de même nature montrent que pour des vitesses ne dépassant pas 15 km/h environ et pour une masse de 525 kg environ, la courbe en question est grosso modo parabolique entre 70-80 mm environ et 160 kN environ.

De ce qui précède, on voit qu'un absorbeur d'énergie selon l'invention qui est compact et autonome assure une progressivité de l'absorption de l'énergie cinétique lors de chocs et que les parties qui sont mises en cause interviennent successivement, par palier, ce qui permet d'éventuelles interventions de réparation ou d'échange graduelles et proportionnées à l'importance du choc, et donc d'un coût réduit et commensuré. Par exemple, le coût de la réparation pour des détériorations à 8 km/h environ sont de l'ordre de 2,5 fois le coût de la réparation pour des détériorations à 4 km/h environ.

Ainsi, à la suite d'un choc qui a eu lieu entre 4 km/h et 8 km/h, il suffit de remplacer la garniture déformable de l'absorbeur. Si le choc a eu lieu au-delà de 8 km/h, on remplace l'absorbeur dont le corps 10 et la tige 22 sont déformés ou détruits. Le remplacement de l'absorbeur est facilité par les moyens de fixation amovibles 40.

Grâce à l'invention, la quantité d'énergie absorbée lors d'un choc qui produit une décélération assez brutale, est notablement augmentée durant environ les 25 premières millisecondes du choc. Habituellement c'est au cours de cette brève période que se déforme aussi les 300 premiers millimètres environ d'un véhicule classique, période pendant laquelle se déploient aussi habituellement les dispositifs pyrotechniques de protection des passagers communément appelés dans la technique "air-bag".

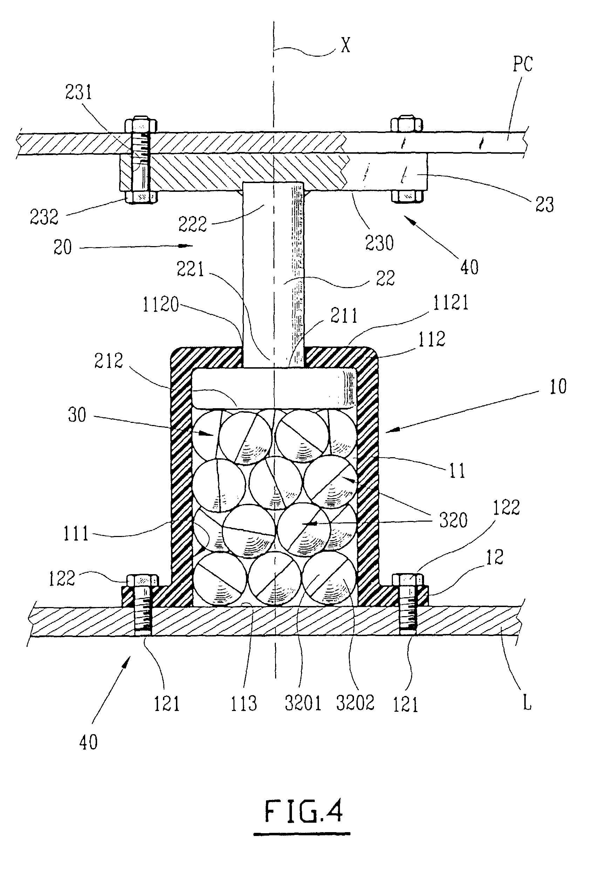

On a représenté sur la Figure 4 un absorbeur d'énergie à action progressive selon un second mode de réalisation de l'invention.

Dans ce cas, la garniture 30 comporte uniquement des sphères creuses 320 placées aléatoirement les unes contre les autres dans la chambre 11.

Les sphères 320 sont en polymère et comprennent chacune deux hémisphères jointives 3201,3202 collées ou soudées entre elles.

Les sphères 320 sont par exemple en polyoléfine (polyéthylène ou polypropylène), de préférence en polypropylène.

Les lignes de jonction des hémisphères correspondent à des lignes de fragilisation de ces sphères. La tenue en compression des sphères dépend donc de la position des points de compression par rapport aux lignes de jonction.

La disposition aléatoire des sphères permet d'obtenir une tenue en compression moyenne homogène de la garniture 30 car les lignes de jonction des hémisphères des différentes sphères sont orientées aléatoirement.

De préférence, le corps 10, le piston 20 et la garniture 30 sont fabriqués en un même polymère, de préférence en polypropylène : les sphères sont fabriquées par exemple en polypropylène extrudé/soufflé, et le corps et le piston sont fabriqués en polypropylène injecté. La garniture 30 peut comporter éventuellement un tampon élastique en polypropylène expansé. Cet absorbeur est facile à recycler car tous les éléments sont fabriqués dans le même matériau.

L'utilisation du polypropylène permet d'obtenir un absorbeur d'énergie léger.

Ce qui précède met bien en lumière les particularités distinctives de l'invention, l'intérêt qu'elle offre et les avantages qu'elle procure, notamment en matière de sécurité passive puisque l'habitacle est préservé de toute déformation et les occupants sont soumis à une décélération de niveau acceptable, et cela sans modification de la longueur hors-tout d'un véhicule et sans atteinte à l'esthétique de sa silhouette.

## Revendications

1. Absorbeur d'énergie à action progressive destiné à être interposé entre un châssis-coque de véhicule automobile terrestre, de préférence un longeron (L) de ce châssis, et un pare-choc (PC) de ce véhicule, du type comprenant :
a) un corps (10) avec une chambre (11) intérieure,
b) un piston (20) muni d'une tête (21), placée dans la chambre (11) de manière à pouvoir y coulisser, et d'une tige (22) qui est montée coulissante à travers une première extrémité passante du corps (10) et qui est reliée par ses extrémités à la tête (21) et à un socle (23) de fixation sur le pare-choc respectivement le châssis-coque, et
c) une garniture (30) déformable et remplaçable placée dans la chambre (11) entre la tête (21) et une seconde extrémité du corps (10) destinée à être fixée sur le châssis-coque respectivement le pare-choc,
caractérisé en ce que la garniture comporte des sphères creuses (320) déformables progressivement élastiquement et plastiquement, en ce que la première extrémité du corps (10) et le socle (23) comprennent des faces d'appui complémentaires (1121,230) coopérant entre elles au-delà d'un seuil de déformation de la garniture (30), de manière à déformer le corps (10), et en ce que la seconde extrémité du corps (10) et le socle (23) comprennent des moyens de fixation libérables (40) permettant le remplacement de l'absorbeur déformé.

2. Absorbeur selon la revendication 1, caractérisé en ce que la première extrémité du corps (10) est délimitée par un fond passant (112) venue de matière avec ce corps (10).

3. Absorbeur selon la revendication 1 ou 2, caractérisé en ce que les moyens de fixation de la seconde extrémité du corps (10) comprennent une embase (12) venue de matière avec le corps dans laquelle sont ménagés des trous (121) pour le passage d'organes de fixation amovibles (122), et en ce que les moyens de fixation du socle (23) comprennent des trous (231) ménagés dans ce socle pour le passage d'organes de fixation amovibles (232).

4. Absorbeur selon la revendication 3, caractérisé en ce que les faces d'appui complémentaires sont centrées sur l'axe (X) de la tige (22) et les trous (231) de fixation du socle (23) sont décalés radialement par rapport à la face d'appui (1121) de la première extrémité du corps (10).

5. Absorbeur selon l'une quelconque des revendications précédentes, caractérisé en ce que la garniture (30) comporte un tampon élastique (31) interposé entre la tête (21) du piston et les sphères (320).

6. Absorbeur selon l'une quelconque des revendications précédentes, caractérisé en ce qu'il comprend plusieurs lits (32) de sphères (320) et en ce qu'au moins deux lits (32) successifs sont séparés par une entretoise (33).

7. Absorbeur selon l'une quelconque des revendications précédentes, caractérisé en ce que la seconde extrémité du corps (10) délimite une embouchure (113), obturable éventuellement par un couvercle (1130), permettant la mise en place de la garniture (30) dans le corps (10) et le retrait de cette garniture en vue de son remplacement.

8. Absorbeur selon l'une quelconque des revendications précédentes, caractérisé en ce que les sphères (320) sont en polymère et comprennent chacune deux hémisphères (3201,3202) jointives, et en ce que les sphères (320) sont placées aléatoirement les unes contre les autres dans la chambre (11) de manière que les lignes de jonction des hémisphères soient orientées aléatoirement.

9. Absorbeur selon la revendication 8, caractérisé en ce que les sphères (320) sont en polyoléfine, de préférence en polypropylène.

10. Absorbeur selon l'une quelconque des revendications précédentes, caractérisé en ce que le corps (10), le piston (20) et la garniture (30) sont fabriqués en un même polymère, de préférence en polypropylène.

## Patentansprüche

1. Puffer mit progressiver Wirkung zum Einbau zwischen der Karosserie eines Landkraftfahrzeugs, vorzugsweise einem Längsträger (L) der Karosserie, und einem Stoßfänger (PC) des Fahrzeugs, wobei der Puffer gattungsmäßig folgende Merkmale aufweist:
a) einen Pufferkörper (10) mit einer innenliegenden Pufferkammer (11),
b) einen Kolben (20) mit einem in der Pufferkammer (11) angeordneten und darin gleitfähigen Kolbenkopf (21) und einer Kolbenstange (22), die so montiert ist, daß sie durch ein mit einer Durchgangsöffnung versehenes erstes Ende des Pufferkörpers (10) gleiten kann, wobei ein Ende der Kolbenstange (22) mit dem Kolbenkopf (21) und das andere Ende der Kolbenstange (22) mit einem stoßfänger- oder karosserieseitigen Befestigungssockel (23) verbunden ist, und
c) eine verformbare und austauschbare Dämpferanordnung (30), die in der Pufferkammer (11) zwischen dem Kolbenkopf (21) und einem karosserie- bzw. stoßfängerseitig zu befestigenden zweiten Ende des Pufferkörpers (10) angeordnet ist,
dadurch gekennzeichnet, daß die Dämpferanordnung (30) Hohlkugeln (320) umfaßt, die progressiv elastisch und plastisch verformbar sind, daß das erste Ende des Pufferkörpers (10) und der Befestigungssockel (23) komplementäre Stützflächen (1121, 230) aufweisen, die bei Überschreitung eines Verformungsgrenzwerts der Dämpferanordnung (30) so zusammenwirken, daß der Pufferkörper (10) verformt wird, und daß das zweite Ende des Pufferkörpers (10) und der Befestigungssockel (23) lösbare Befestigungseinrichtungen (40) aufweisen, die einen Austausch des verformten Puffers ermöglichen.

2. Puffer nach Anspruch 1, dadurch gekennzeichnet, daß das erste Ende des Pufferkörpers (10) durch einen einstückig mit dem Pufferkörper (10) ausgebildeten Durchgangsboden (112) begrenzt ist.

3. Puffer nach Anspruch 1 oder 2, dadurch gekennzeichnet, daß die zum Befestigen des zweiten Endes des Pufferkörpers (10) dienenden Einrichtungen eine einstückig mit dem Pufferkörper (10) ausgebildete Flanschfläche (12) mit Bohrungen (121) zum Durchführen von lösbaren Befestigungselementen (122) umfassen und daß die zum Befestigen des Sockels (23) dienenden Einrichtungen im Sockel (23) ausgebildete Bohrungen (231) zum Durchführen von lösbaren Befestigungselementen (232) umfassen.

4. Puffer nach Anspruch 3, dadurch gekennzeichnet, daß die komplementären Stützflächen bezüglich der Achse (X) der Kolbenstange (22) zentriert sind und daß die zum Befestigen des Sockels (23) dienenden Bohrungen (231) bezüglich der Stützfläche (1121) des ersten Endes des Pufferkörpers (10) radial versetzt sind.

5. Puffer nach einem der vorhergehenden Ansprüche, dadurch gekennzeichnet, daß die Dämpferanordnung (30) einen zwischen dem Kolbenkopf (21) und den Kugeln (320) angeordneten elastischen Pfropfen (31) aufweist.

6. Puffer nach einem der vorhergehenden Ansprüche, dadurch gekennzeichnet, daß der Puffer mehrere Lagen (32) von Kugeln (320) umfaßt und daß wenigstens zwei aufeinanderfolgende Lagen (32) durch eine Zwischenlage (33) getrennt sind.

7. Puffer nach einem der vorhergehenden Ansprüche, dadurch gekennzeichnet, daß das zweite Ende des Pufferkörpers (10) eine eventuell durch einen Deckel (1130) verschließbare Mündung (113) begrenzt, durch welche die Dämpferanordnung (30) zum Zweck ihres Austauschs in den Pufferkörper (10) eingeführt und aus diesem entnommen werden kann.

8. Puffer nach einem der vorhergehenden Ansprüche, dadurch gekennzeichnet, daß die Kugeln (320) aus Polymer bestehen und jeweils zwei zusammengefügte Halbkugeln (3201, 3202) umfassen und daß die Kugeln (320) in der Pufferkammer (11) in einer Zufallsanordnung aneinander liegen, so daß die Fügelinien der Halbkugeln ungeordnet ausgerichtet sind.

9. Puffer nach Anspruch 8, dadurch gekennzeichnet, daß die Kugeln (320) aus Polyolefin, vorzugsweise aus Polypropylen, bestehen.

10. Puffer nach einem der vorhergehenden Ansprüche, dadurch gekennzeichnet, daß der Pufferkörper (10), der Kolben (20) und die Dämpferanordnung (30) aus einem gleichen Polymer, vorzugsweise aus Polypropylen, hergestellt sind.

## Claims

1. A progressive-action energy absorber for positioning between an automotive land vehicle chassis body-frame, preferably a side rail (L) of said chassis, and a bumper (PC) of said vehicle, of the type comprising:
(a) a body (10) with an interior chamber (11),
(b) a plunger (20) provided with a crown (21), which crown is disposed in the chamber (11) in such a manner that it can slide therein, and with a rod (22) which is slidingly mounted through a first traversable extremity of the body (10) and which is joined by its extremities to the crown (21) and to a mounting plate (23) for securing on the bumper and the chassis body-frame respectively, and
(c) a deformable, replaceable packing (30) disposed in the chamber (11) between the crown (21) and a second extremity of the body (10) designed to be secured on the chassis body-frame and the bumper respectively,
characterised in that the packing comprises hollow spheres (320) which are deformable in a progressively flexible and plastic manner, in that the first extremity of the body (10) and the mounting plate (23) comprise complementary bearing faces (1121, 230) mutually co-operating beyond a deformation threshold of the packing (30) so as to deform the body (10), and in that the second extremity of the body (10) and the mounting plate (23) comprise detachable securing means (40) enabling the deformed absorber to be replaced.

2. An absorber as claimed in claim 1, characterised in that the first extremity of the body (10) is bounded by a traversable base (112) which is integral with said body (10).

3. An absorber as claimed in claim 1 or 2, charactensed in that the securing means of the second extremity of the body (10) comprise a seat (12) which is integral with the body and in which there are recessed holes (121) for removable securing members (122) to pass through, and in that the securing means of the mounting plate (23) comprise holes (231) recessed in said mounting plate for removable securing members (232) to pass through.

4. An absorber as claimed in claim 3, characterised in that the complementary bearing faces are centred on the axis (X) of the rod (22) and the holes (231) for securing the mounting plate (23) are radially offset relative to the bearing face (1121) of the first extremity of the body (10).

5. An absorber as claimed in any one of the preceding claims, characterised in that the packing (30) compnses a flexible buffer (31) positioned between the crown (21) of the plunger and the spheres (320).

6. An absorber as claimed in any one of the preceding claims, characterised in that it comprises a plurality of layers (32) of spheres (320), and in that at least two successive layers (32) are separated by a spacer (33).

7. An absorber as claimed in any one of the preceding claims, characterised in that the second extremity of the body (10) defines an orifice (113) which may be sealed by a cover (1130) and via which the packing (30) may be placed in the body (10) and removed for replacement purposes.

8. An absorber as claimed in any one of the preceding claims, characterised in that the spheres (320) are made of polymer and each comprise two contiguous hemispheres (3201, 3202), and in that the spheres (320) are placed against each other at random in the chamber (11) so that the hemisphere contiguity lines have random orientation.

9. An absorber as claimed in claim 8, characterised in that the spheres (320) are made from a polyolefin, preferably from polypropylene.

10. An absorber as claimed in any one of the preceding claims, characterised in that the body (10), the plunger (20) and the packing (30) are made from the same polymer, preferably from polypropylene.
